(19) Europäisches Patentamt
European Patent Office
Office européen des brevets

(11) EP 0 963 398 B1

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(21) Anmeldenummer: **98910698.4**

(22) Anmeldetag: **18.02.1998**

(51) Int Cl.[7]: **C08G 77/20**, C08G 77/58, C08G 77/24, C08G 77/442, C08F 299/08

(86) Internationale Anmeldenummer:
**PCT/EP98/00910**

(87) Internationale Veröffentlichungsnummer:
**WO 98/37127 (27.08.1998 Gazette 1998/34)**

(54) **HYDROXYLGRUPPEN-ARME ORGANISCH/ANORGANISCHE KOMPOSITE, VERFAHREN ZU DEREN HERSTELLUNG UND DEREN VERWENDUNG**

ORGANIC/INORGANIC COMPOSITES WITH LOW HYDROXYL GROUP CONTENT, METHOD FOR THEIR PRODUCTION AND APPLICATION

COMPOSITES ORGANIQUES/INORGANIQUES A FAIBLE TENEUR EN GROUPE HYDROXYLE, PROCEDE DE PRODUCTION ET APPLICATION

(84) Benannte Vertragsstaaten:
**DE ES FR GB IE IT NL SE**

(30) Priorität: **19.02.1997 DE 19706515**

(43) Veröffentlichungstag der Anmeldung:
**15.12.1999 Patentblatt 1999/50**

(73) Patentinhaber: **Institut Für Neue Materialien gem. GmbH**
**66123 Saarbrücken (DE)**

(72) Erfinder:
- **FRIES, Kira**
  **D-66538 Neunkirchen (DE)**
- **MENNIG, Martin**
  **D-66287 Quierschied (DE)**
- **SCHMIDT, Helmut**
  **D-66130 Saarbrücken (DE)**
- **SOHLING, Ulrich**
  **D-85354 Freising (DE)**
- **XING, Qiwu**
  **D-66424 Hornburg (DE)**
- **ZAHNHAUSEN, Michael**
  **D-66113 Saarbrücken (DE)**

(74) Vertreter: **Barz, Peter**
**Patentanwalt**
**Kaiserplatz 2**
**80803 München (DE)**

(56) Entgegenhaltungen:
**EP-A- 0 287 877**
**WO-A-92/16183**
**WO-A-93/06508**
**WO-A-93/07179**
**DE-A- 3 920 297**
**DE-A- 4 205 819**

- **TAKAHIRO GUNJI ET AL: "STUDIES ON THE SYNTHESES OF POLYMETALLOXANES AND THEIR PROPERTIES AS A PRECURSOR FOR AMORPHOUS OXIDE V. PREPARATION AND PROPERTIES OF POLYTITANOSILOXANES FROM SILICIC ACID AND BIS(2,4-PENTANEDIONATO) - TITANIUM DISSOPROPOXIDE" JOURNAL OF POLYMER SCIENCE, POLYMER CHEMISTRY EDITION, Bd. 29, Nr. 7, 1.Juni 1991, Seiten 941-947, XP000228772**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 963 398 B1

**Beschreibung**

Die vorliegende Erfindung betrifft vorzugsweise transparente, Hydroxylgruppen-arme organisch/anorganische Komposite, Verfahren zu deren Herstellung und deren Verwendung.

Der vorliegenden Erfindung lag die Aufgabe zugrunde, vorzugsweise transparente Kompositmaterialien auf der Basis von Kieselsäure-Heteropolykondensaten zu entwickeln, die eine möglichst niedrige Wasseraufnahme zeigen.

Es ist bekannt, daß derartige Kieselsäure-Heteropolykondensate, wenn sie über den herkömmlicherweise eingesetzten Sol-Gel-Prozeß hergestellt werden, über einen nicht zu vernachlässigenden Gehalt an OH-Gruppen verfügen, der von der Hydrolyse und Kondensation der eingesetzten Ausgangsmaterialien (Silane usw.) herrührt. In der Literatur sind verschiedene Wege zur Verminderung des Hydroxylgruppen-Gehalts in derartigen Polykondensaten vorgeschlagen worden, z. B. durch Umsetzung dieser Polykondensate mit Verbindungen, die mit Wasser bzw. OH-Gruppen reagieren. Typische Beispiele hierfür sind die Umsetzung mit Halogeniden der vierten Haupt- und Nebengruppe ($SiCl_4$, $TiCl_4$ usw.) oder Chlor (z.B. bei Versuchen, Lichtleitfasern auf der Basis von $SiO_2$ mit niedrigem OH-Gruppengehalt heizustellen). In den beschriebenen Fällen gelingt es jedoch in der Regel nicht, den OH-Gruppengehalt bis in den ppb-Bereich herunter zu reduzieren.

Ein anderer vorgeschlagener Weg besteht darin, von vornherein zu verhindern, daß die hergestellten Kieselsäure-Heteropolykondensate größere Mengen an Wasser bzw. SiOH-Gruppen aufweisen. Dies trifft z.B. auf die Umsetzung von Alkoxysilanen mit Säuren im Überschuß zu (siehe z.B. Noll, W.: Chemie und Technologie der Silicone, Verlag Chemie, Weinheim, Bergstraße, 1960, und Voronkov, M.G., Mileshkevich, V.P., Yuzhelevski, Yu.A., The Siloxane Bond, Plenum, New York, London, 1978, S. 236). Bei diesen Reaktionen können zum Teil reaktive Zwischenverbindungen im Sinne von Alkylsilanen entstehen, die dann wiederum durch Esterabspaltung (Carbonsäureester oder Ester von Mineralsäuren) während eine Kondensationsprozesses Wasser freisetzen, das jedoch molekular-dispers verteilt ist. Dieses molekular-dispers verteilte Wasser wird dann wieder zur Hydrolyse und Weiterkondensation eingesetzt und dadurch verbraucht. Die Bruttoreaktion kann durch die folgende Gleichung dargestellt werden:

$$2 \equiv \mathbf{Si\text{-}OR + HHal} \rightarrow \equiv \mathbf{Si\text{-}O\text{-}Si} \equiv \mathbf{+ ROH + RHal}$$

**(Hal = Halogen)**

Diese Reaktionen wurden jedoch in der Regel nicht zur Herstellung extrem wasserfreier Kondensate, sondern meistens zur homogenen Erzeugung des für den Hydrolyse-und Kondensationsprozeß benötigten Wassers verwendet (siehe z.B. Schmidt, H.-K., Chemistry and Applications of Inorganic-Organic Polymers, Mat. Res. Soc. Symp. Proc., Band 73, 1986, S. 741). Dabei wird der "wasserfreie" Reaktionsweg benutzt, um die Ausfällung von Oxiden oder Hydroxiden reaktiver Alkoxide (z.B. Titanalkoxid, Aluminiumalkoxid) in Gegenwart von langsam reagierenden Kieselsäureestern durch direkte Wasserzugabe zu vermeiden. OH-Gruppengehalte bis in den ppm-Bereich sind auf diesem Weg jedoch nicht erzielbar.

Möglichst geringe OH-Gruppengehalte von Kieselsäure-Heteropolykondensaten sind insbesondere deshalb wünschenswert, da derartige OH-Gruppen in Verbindung mit anorganischen Gruppierungen wie -Si-O-Si oder -Si-O-Metall, wie sie in derartigen Polykondensaten vorliegen, eine von der Luftfeuchtigkeit abhängige Wasseraufnahme bewirken, so daß damit das gewünschte Ziel, eine extrem niedrige Wasseraufnahme zu gewährleisten, nicht erreicht werden kann.

WO 92/16183 beschreibt die Verwendung von Zusammensetzungen auf der Basis organisch modifizierter Kieselsäure-Polykondensate für die Beschichtung von Zähnen und Zahnersatzteilen, wobei die eingesetzten Silane C-C-Doppelbindungen enthalten können. Die Möglichkeit einer wasserfreien Polykondensation wird erwähnt.

Es wurde nun überraschend gefunden, daß durch die Kombination von u.a. der oben genannten "wasserfreien" Reaktionswege und der Erhöhung der Hydrophobie des Netzwerkes durch die Synthese von anorganisch/organischen Kompositmaterialien mit einem Kieselsäure-Heteropolykondensat als Netzwerk die obige Aufgabe gelöst werden kann. Dabei wird zunächst ein Kieselsäure-Netzwerk über das oben beschriebene Reaktionsprinzip aufgebaut. Dies läßt sich z.B. durch die folgenden allgemeinen Gleichungen darstellen:

$$\equiv SiOR + HX \leftrightarrows \equiv SiX + HOR$$

$$\equiv SiOR + SiX \rightarrow \equiv Si\text{-}O\text{-}Si \equiv + XR$$

**X = z.B. -Hal,** 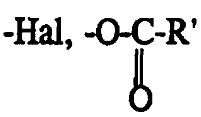

$$\equiv SiX + SiOR \rightarrow \equiv Si\text{-}O\text{-}Si \equiv + XR$$

**X = z.B. -Hal,** 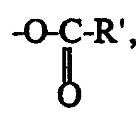 **, NR'₂**

R bzw. R' = z.B. Alkyl, Aryl

Zumindest ein Teil der für die obigen Netzwerk-Aufbau eingesetzten Silane weist Gruppen auf, die in der Lage sind, organische Polymerketten aufzubauen, z.B. (Meth)acryl- oder Vinylgruppen.

Um die Hydrophobie des Netzwerkes zu steigern, können zusätzlich Silane mit hydrophobisierenden Gruppen eingesetzt werden, nämlich solche mit (per)fluorierten Seitenketten (insbesondere (per)fluorierten Alkyl- und Arylgruppen).

Eine weitere alternative Komponente sind (per)fluorierte polymerisierbare organische Monomere, die mit polymerisierbaren Seitenketten der obigen Silane eine Polymerisationsreaktion eingehen können. Dies ist insbesondere dann angezeigt, wenn keine Silane mit (per)fluorierten Seitenketten bzw. Gruppen zum Aufbau des Kieselsäure-Netzwerks eingesetzt wurden, da ein bestimmter Fluorgehalt der erfindungsgemäßen Komposite sehr wünschenswert ist.

Als weitere alternative Komponente zur Herstellung der erfindungsgemäßen Hydroxylgruppen-armen Komposite können auch Nanopartikel mit niedrigem OH-Gruppengehalt eingesetzt werden, wie sie erfindungsgemäß ebenfalls zugänglich sind.

Konkret stellt die vorliegende Erfindung ein Verfahren zur Herstellung Hydroxylgruppen-armer organisch/anorganischer Komposite bereit, welches umfaßt

(1) die nicht-hydrolytische Kondensation eines oder mehrerer Silane, von denen zumindest ein Teil über eine über eine Si-C-Bindung an Si gebundene Gruppe mit mindestens einer polymerisierbaren C-C-Doppel- oder Dreifachbindung verfügt, wobei gegebenenfalls weitere nicht zur Kondensation heranziehbare Gruppen an den Si-Atomen der Silane aus fluorhaltigen Gruppen ausgewählt werden; und
(2) die thermische und/oder photochemische Polymerisation des Kondensationsprodukts von Stufe (1);

wobei das Kondensationsprodukt, sofern es keine fluorhaltigen Gruppen umfaßt, vor der Polymerisation mit mindestens einer fluorierten, mit dem Kondensationsprodukt copolymerisierbaren organischen Verbindung und/oder mit Hydroxylgruppen-armen Nanopartikeln versetzt wird.

Im folgenden werden bevorzugte Ausführungsformen dieses Verfahrens näher erläutert.

Gemäß einer bevorzugten Ausführungsform beinhaltet das obige Verfahren

(a) die nicht-hydrolytische Kondensation mindestens eines Chlorsilans der allgemeinen Formel (1)

$$R^1{}_aR^2{}_bSi(Cl)_c \qquad (1)$$

in welcher
$R^1$ eine über eine Si-C-Bindung an Si gebundene Gruppe mit mindestens einer polymerisierbaren Kohlenstoff-Kohlenstoff-Doppel- oder Dreifachbindung (vorzugsweise Doppelbindung) ist,
$R^2$ eine gegebenenfalls substituierte, gesättigte aliphatische oder aromatische Kohlenwasserstoffgruppe darstellt,
a = 1 oder 2,
b = 0 oder 1,
c = 2 oder 3,
wobei (a+b+c) = 4;
gegebenenfalls in Kombination mit

(i) mindestens einem Chlorsilan der allgemeinen Formel (2)

$$R^1{}_dR^2{}_eSi(Cl)_f \qquad (2)$$

in welcher
$R^1$ und $R^2$ wie oben definiert sind,
d = 0 oder 3,
e = 0, 1, 2 oder 3,
f = 1, 2 oder 3,
wobei (d+e+f) = 4 und für d = 3 und e = 2 oder 3 die Gruppen $R^1$ bzw. $R^2$ gleich oder verschieden sein können; und/oder
(ii) mindestens einer aus den Tetrachloriden und Tetrabromiden von Ge, Si, Ti und Zr sowie $AlCl_3$ und $AlBr_3$ ausgewählten Verbindung;

mit Hilfe eines zur nicht-hydrolytischen Kondensation der obigen Halogenverbindungen befähigten Kondensationsmittels; oder
(a') die Kondensation mindestens eines Alkoxysilans der allgemeinen Formel (3)

$$R^1{}_aR^2{}_bSi(OR)_c \qquad (3)$$

in welcher
$R^1$, $R^2$, a, b und c wie oben definiert sind und R für Alkyl (vorzugsweise mit 1 bis 4 Kohlenstoffatomen wie beispielsweise Methyl, Ethyl, n- und i-Propyl, vorzugsweise Methyl oder Ethyl) steht;
gegebenenfalls in Kombination mit

(i') mindestens einem Alkoxysilan der allgemeinen Formel (4)

$$R^1{}_dR^2{}_cSi(OR)_f \qquad (4)$$

in welcher
$R^1$, $R^2$, R, d, e und f wie oben definiert sind; und/oder
(ii') mindestens einer Verbindung der allgemeinen Formel (5)

$$M(OR)_g \quad (5)$$

in welcher
R wie oben definiert ist,
M = Ge, Si, Ti, Zr oder Al,
g = 3 im Falle von M = Al und ansonsten g = 4;

mit Hilfe einer wasserfreien Säure (z.B. einer Mineralsäure wie HCl, HBr und HI oder einer organischen Säure wie beispielsweise Ameisensäure, Essigsäure, Trifluoressigsäure usw.);
(b) die thermische und/oder photochemische Polymerisation des Kondensationsprodukts von Stufe (a) oder (a').

Nach diesem Verfahren erhältliche Hydroxylgruppen-arme organisch/anorganische Komposite und die Kondensationsprodukt-Vorstufen für diese Komposite sind ebenfalls Gegenstand der vorliegenden Erfindung.

Selbstverständlich können auch Mischungen von Chlorsilanen und Alkoxysilanen im erfindungsgemäßen Verfahren ohne Verwendung von Wasserzusatz kondensiert werden. Entsprechende Verfahren sind dem Fachmann ebenfalls bekannt.

Ein bevorzugtes Kondensationsmittel für die nicht-hydrolytische Kondensation gemäß der obigen Variante (a) des erfindungsgemäßen Verfahrens ist t-Butanol (2-Methyl-2-propanol). Beispiele für andere geeignete nicht-hydrolytische Kondensationsmittel sind Benzylalkohol, Benzaldehyd, Tetrabenzoxysilan, Diisopropylether, Diethylether, Dibenzylether und Trifluoressigsäure.

Im Falle der obigen Variante (a) mit t-Butanol als Kondensationsmittel geht man z.B. wie folgt vor:

Die entsprechenden Chlorsilane (der allgemeinen Formel (1) und gegebenenfalls der allgemeinen Formel (2)) sowie die übrigen gemäß Variante (a) fakultativ einsetzbaren Verbindungen werden mit t-Butanol in einem Mol-Verhältnis von Kondensationsmittel zur Anzahl der reaktiven Chlor- und Bromatome von etwa 0,5:1 umgesetzt, wobei HCl bzw. HBr freigesetzt wird. Die Reaktion wird in der Regel bei erhöhten Temperaturen durchgeführt, vorzugsweise bei etwa 50 bis 80°C. Die gebildeten t-Butoxysilanfunktionen reagieren dann unter Kondensation mit einer weiteren Halogensilanfunktion unter Ausbildung einer Siloxanbindung und Freisetzung von t-Butylhalogenid. Die Umsetzung dauert normalerweise etwa 3 bis 24 Stunden. Nach Abdestillation der leicht flüchtigen Bestandteile wird erneut mit der gleichen Menge Kondensationsmittel umgesetzt. Nach erneuter Abdestillation erhält man ein OH-armes Ormocer-Sol. Alternativ zu t-Butanol können auch andere Kondensationsmittel eingesetzt werden, z. B. die bereits oben angegebenen.

Eine weitere Verringerung des OH-Gruppengehaltes des Sols kann dadurch erzielt werden, daß man das Sol mit einem Überschuß eines Trialkylchlorsilans unter Rückfluß erhitzt. Dabei kann es sich beispielsweise um Trimethylchlorsilan, Trivinylchlorsilan oder Triethylchlorsilan handeln. Das molare Verhältnis von Monochlorsilan zu kondensierten Silanmonomeren liegt dabei vorzugsweise zwischen 1:10 und 1:5. Die Umsetzung erfolgt durch Kochen unter Rückfluß mit Reaktionszeiten im Bereich von wenigen Stunden. Anschließend werden die leichtflüchtigen Komponenten im Vakuum entfernt. Die soeben beschriebene Nachbehandlung ist bei alleiniger Verwendung von Dichlorsilanen in der Regel nicht erforderlich, kann aber bei (Mit)verwendung von Trichlorsilanen vorteilhaft sein.

Um eine leichte Verarbeitbarkeit der so erhältlichen Sole ohne einen Zusatz von Lösungsmitteln zu ermöglichen, z.B. für eine Strukturierung durch Prägen oder für einen Reaktivguß, ist es erforderlich, die Viskosität der Sole gezielt einzustellen. Dies kann z.B. dadurch erfolgen, daß man die relativen Verhältnisse der Verbindungen mit zwei, drei bzw. vier reaktiven Halogenatomen geeignet einstellt. Je höher der Anteil an Verbindungen mit nur zwei Halogenatomen pro Molekül, desto geringer ist die Viskosität der resultierenden Sole, während mit zunehmendem Anteil an Verbindungen mit drei oder gar vier reaktiven Halogenatomen die Viskosität der Sole zunimmt. Somit läßt sich die Viskosität der Sole durch geeignete Wahl der Ausgangs-Halogenverbindungen maßschneidern.

Das Sol kann vor der weiteren Verarbeitung gewünschtenfalls mit fluorierten organischen Monomeren und/oder OH-armen oxidischen Nanopartikeln versetzt werden, wie dies weiter unten noch beschrieben werden wird.

Vorzugsweise beträgt der Anteil an Silanen der obigen allgemeinen Formeln (1) und/oder (3) an allen vorhandenen kondensierbaren Verbindungen bei allen obigen Varianten des erfindungsgemäßen Verfahrens mindestens 2 Mol-%, insbesondere mindestens 5 Mol-% und besonders bevorzugt mindestens 10 Mol-%. Die entsprechende Obergrenze ist 100 Mol-%, vorzugsweise 75 Mol-%, bevorzugter 50 Mol-% und besonders bevorzugt 35 Mol-%.

Die Gruppen $R^1$ in den obigen allgemeinen Formeln (1) bis (4) sind vorzugsweise solche der Formel $H_2C=CR^3CO-O-(CH_2)_n-CH_2-$, wobei $R^3$ für H, $CH_3$, F oder Cl, vorzugsweise H und $CH_3$, steht und n = 1 - 5, vorzugsweise 1 oder 2 und besonders bevorzugt 2, und/oder Allyl- oder Vinylgruppen.

Bei den Gruppen $R^2$ in den obigen allgemeinen Formeln (1) bis (4) handelt es sich vorzugsweise um (insbesondere unsubstituierte) Alkylgruppen, bevorzugt solche mit 1 bis 6 Kohlenstoffatomen (z.B. Methyl, Ethyl, Propyl und Butyl bevorzugt Methyl und/oder Ethyl), und/oder um Fluoralkylgruppen, insbesondere solche mit 2 bis 14 Kohlenstoffatomen und mindestens 3, insbesondere mindestens 4 und besonders bevorzugt mindestens 5 Fluoratomen, wobei die Gruppen $R^2$ in den Formeln (1) und (3) vorzugsweise Alkylgruppen und in den Formeln (2) und (4) vorzugsweise Fluoralkylgruppen und Alkylgruppen sind. Beispiele für derartige Fluoralkylgruppen sind Tridecafluor-1,1,2,2-tetrahydrooctyl und Heptadecafluor-1,1,2,2-tetrahydrodecyl. Als andere bevorzugte fluorierte Gruppen $R^2$ können auch fluorierte aromatische Gruppen fungieren, wie beispielsweise Pentafluorphenyl. Ganz allgemein sind fluorhaltige Gruppen mit möglichst hohem Fluorgehalt für die erfindungsgemäßen Zwecke bevorzugt.

Bevorzugte Verbindungen der allgemeinen Formel (1) oder (3) sind solche, in denen a = 1 ist, während in bevorzugten Verbindungen der allgemeinen Formel (2) oder (4) d = 0, e = 0, 1 oder 2 (insbesondere 1 oder 2) und f = 2 oder 3.

An die Herstellung des Polykondensats gemäß den obigen Varianten (a) und (a') schließt sich eine Polymerisation der in den Polykondensaten enthaltenen, von den Gruppen $R^1$ herrührenden polymerisierbaren Doppel- (oder Dreifach-)bindungen an, um die Polykondensate (thermisch oder photochemisch) auszuhärten. Zu diesem Zweck kann dem Polykondensat ein Thermostarter und/oder ein Photostarter zugesetzt werden. Insbesondere bei der photochemischen Polymerisation ist die Zugabe eines Photostarters bevorzugt. Als Photostarter können z.B. die im Handel erhältlichen Starter verwendet werden. Beispiele hierfür sind Irgacure® 184 (1-Hydroxycyclohexylphenylketon), Irgacure® 500 (1-Hydroxycyclohexylphenylketon, Benzophenon) Irgacure® 369 und andere von der Firma Ciba-Geigy erhältliche Photoinitiatoren vom Irgacure®-Typ; Darocur® 1173, 1116, 1398, 1174 und 1020 (erhältlich von der Firma Merck), Benzophenon, Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Im Fall der Verwendung eines Thermostarters können ebenfalls die auf diesem Gebiet herkömmlichen Starter verwendet werden. Beispiele hierfür sind u.a. organische Peroxide in Form von Diacylperoxiden, Peroxydicarbonaten, Alkylperestern, Dialkylperoxiden, Perketalen, Ketonperoxiden, Alkyl- und Arylperoxiden und Alkylhydroperoxiden sowie Azo-Verbindungen. Konkrete Beispiele für derartige thermische Initiatoren sind Dibenzoylperoxid, Dilauroylperoxid, tert-Butylperbenzoatund Azobisisobutyronitril. Auch Persulfate können in diesem Zusammenhang genannt werden.

Bei der thermischen Polymerisation hängt die Polymerisationstemperatur in erster Linie von der Zersetzungstemperatur des Thermostarters ab, ist jedoch vorzugsweise nicht höher als 135°C und insbesondere nicht höher als 110°C.

Der Gehalt an Photo- und/oder Thermostarter beträgt in der Regel 0,05-15 Mol-%, bevorzugt 0,1-9 Mol-% und besonders bevorzugt 0,5-5 Mol-%, bezogen auf die polymerisierbaren Bindungen.

Schließlich sei auch noch bemerkt, daß thermische und photochemische Polymerisation auch kombiniert werden können, z.B. dadurch, daß sich an die photochemische Polymerisation eine thermische Nachhärtung anschließt.

Gemäß einer bevorzugten Ausführungsform des erfindungsgemäßen Verfahrens wird die Polymerisation der obigen Stufe (2) bzw. (b) in Form einer Copolymerisation des Polykondensats von Stufe (1) bzw. (a) oder (a') mit mindestens einer organischen Verbindung, die kein von C, H, D, O, N und Halogen verschiedenes Element enthält und über eine einzelne polymerisierbare Kohlenstoff-Kohlenstoff-Doppel- oder Dreifachbindung (vorzugsweise Doppelbindung) verfügt, durchgeführt. Beispiele für derartige organische Verbindungen sind die herkömmlichen, radikalisch polymerisierbaren Monomere, wie sie z.B. für die Herstellung von Kunststoffen eingesetzt werden.

Insbesondere wenn das Polykondensat ohne Verwendung von Ausgangsmaterialen mit fluorhaltigen Gruppen hergestellt wurde, ist es bevorzugt, daß zumindest ein Teil der organischen polymerisierbaren Verbindung fluorhaltig ist. Besonders bevorzugte organische Verbindungen enthalten in diesem Fall mindestens 3, insbesondere mindestens 4 und besonders bevorzugt mindestens 5 Fluoratome im Molekül. Unter diesen Verbindungen sind wiederum organische Verbindungen, die eine vorzugsweise aliphatische Gruppe mit mindestens 2 Kohlenstoffatomen und mindestens 4 Fluoratomen enthalten, besonders bevorzugt. (Per)fluorierte aromatische Gruppen wie z.B. Pentafluorphenyl können zu diesem Zweck ebenfalls vorteilhaft sein.

Fluorierte organische Verbindungen zur Copolymerisation mit dem Polykondensat können z.B. aus ganz oder teilweise fluoriertem Styrol (oder Derivaten desselben), ganz oder teilweise fluorierten Estern von einfach ungesättigten Mono- und Polycarbonsäuren, fluorierten Allylverbindungen und fluorierten Vinylverbindungen und Mischungen davon ausgewählt werden. Konkrete Beispiele für diese Verbindungen werden weiter unten genannt.

Selbstverständlich ist es auch möglich, bei der Polymerisation von Stufe (2) bzw. (b) Vernetzungsmittel einzusetzen, was insbesondere dann erwünscht sein kann, wenn sich unter den Silanen der obigen Formeln (1) bis (4) keines befand, in dem der Wert von a bzw. d größer als 1 war. Als Vernetzungsmittel eignen sich z. B. die herkömmlichen (gegebenenfalls fluorierten) organischen Verbindungen mit mindestens zwei polymerisierbaren Kohlenstoff-Kohlenstoff-Doppel- und/oder Dreifachbindungen sowie entsprechende silanfunktionalisierte Vernetzungsmittel. Konkrete Beispiele für derartige Vernetzungsmittel werden weiter unten noch angegeben.

Wie bereits oben erwähnt, können die erfindungsgemäßen organisch/anorganischen Komposite als weitere alternative Komponente oxidische Nanopartikel mit niedrigem OH-Gruppengehalt enthalten. Unter "Nanopartikeln" werden im vorliegenden Fall Teilchen mit einer durchschnittlichen Teilchengröße von nicht mehr al 100 nm, vorzugsweise nicht mehr als 50 nm und insbesondere nicht mehr als 20 nm verstanden. Obwohl der Teilchengröße nach unten keine Grenze gesetzt ist, liegt die Untergrenze der durchschnittlichen Teilchengröße gewöhnlich bei 1 nm.

Die vorliegende Erfindung stellt auch ein Verfahren zur Herstellung derartiger oxidischer Nanopartikel mit niedrigem OH-Gruppengehalt bereit. Insbesondere umfaßt dieses Verfahren die Umsetzung mindestens eines Chlorids, Bromids oder Iodids von Ge, Sn, Si, Ti, Zr, Hf, Al, Zn, Nb oder Ta (vorzugsweise von Si) und einem zur nicht-hydrolytischen Kondensation dieser Halogenide befähigten Kondensationsmittel (wobei als derartiges Kondensationsmittel die bereits oben für Variante (a) des erfindungsgemäßen Verfahrens zur Herstellung von Kompositen angeführten Verbindungen geeignet sind) in einem gegenüber den Reaktanten und Produkten inerten (aprotischen) Lösungsmittel und gegebenenfalls die anschließende Umsetzung der gebildeten Nanopartikel mit einem Oberflächenmodifizierungsmittel, das die an den Oberflächen der Nanopartikel vorhandenen Reste, die vom Kondensationsmittel abgeleitet sind, durch Reste mit Gruppen mit polymerisierbaren Bindungen und/oder Alkylgruppen ersetzen kann.

Vorzugsweise beträgt das Molverhältnis von Halogenatomen in der zu kondensierenden Verbindung zum Kondensationsmittel 1:1 bis 1:50, insbesondere 1: 2 bis 1:30.

Als inertes Lösungsmittel eignen sich z.B. Kohlenwasserstoffe, die gegebenenfalls Halogen-(insbesondere Chlor-)Substituenten aufweisen. Besonders bevorzugte Kohlenwasserstoffe sind aliphatische Kohlenwasserstoffe, wobei konkrete Beispiele für besonders bevorzugte Lösungsmittel Methylenchlorid und Chloroform sind.

Vorzugsweise wird die Kondensation bei erhöhter Temperatur durchgeführt, wobei die Temperaturobergrenze üblicherweise der Siedepunkt des Lösungsmittels oder des Kondensationsmittels (je nachdem, welches der beiden den niedrigeren Siedepunkt aufweist) ist. Übliche Temperaturen liegen zwischen etwa 40 und 70°C. Die Reaktion wird in diesem Fall vorzugsweise durch Abkühlen des Reaktionsgemisches (z. B. auf 0°C) abgebrochen. Darauf können die flüchtigen Bestandteile (z.B. im Vakuum) entfernt werden. Die Kondensationsreaktion wird zweckmäßigerweise auch in Anwesenheit eines Katalysators durchgeführt, z.B. einer Lewis-Säure wie beispielsweise Eisenchlorid.

In einer bevorzugten Ausführungsform des obigen Verfahrens werden die so hergestellten oxidischen Nanopartikel einer Oberflächenmodifikation unterzogen, um die vom Kondensationsmittel abgeleiteten Reste auf den Teilchenoberflächen (z.B. t-Butylgruppen im Fall der Verwendung von t-Butanol) in chemisch stabilere Gruppen zu überführen, die die Teilchen stabilisieren. Gemäß einer bevorzugten Ausführungsform werden die Teilchen zur Oberflächenmodifizierung mit einem Überschuß an Oberflächenmodifizierungsmittel behandelt, bei dem es sich vorzugsweise um mindestens ein Chlorsilan der obigen allgemeinen Formel (1) oder (2) handelt. Die so hergestellten Partikel weisen eine sehr geringen Hydroxylgruppen-Gehalt (z.B. Silanolgehalt) auf und lassen sich durch Abziehen des Lösungsmittels isolieren und in halogenierten Lösungsmitteln und fluorierten Monomeren redispergieren. Zur Oberflächenmodifizierung der Teilchen setzt man zweckmäßigerweise Alkylchlorsilane ein, die polymerisierbare Gruppen wie Acrylatoder Methacrylatgruppen tragen. Dies ermöglicht eine kovalente Anbindung der Partikel an das polymere Netzwerk der Matrix, die sowohl aus den oben beschriebenen Polykondensaten als auch aus den oben beschriebenen fluorierten organischen Verbindungen oder einer Mischung der beiden gebildet sein kann. (Weitere bevorzugte Silan-Oberflächenmodifizierungsmittel sind Trialkylchlorsilane und Trialkenylchlorsilane.)

Konkrete Beispiele für die obigen Oberflächenmodifizierungsmittel sind die folgenden Chlorsilane:

silanfunktionalisierte (Meth)acrylate (der letztgenannte Ausdruck soll, wo immer er hierin verwendet wird, sowohl Acrylate als auch Methacrylate einschließen) wie z.B. (Meth)acryloxypropyltrichlorsilan, (Meth)acryloxypropylmethyldichlorsilan, (Meth)acryloxyethyltrichlorsilan und (Meth)acryloxyethylmethyldichlorsilan sowie entsprechende von $\alpha$-Chlor- und $\alpha$-Fluoracrylsäure abgeleitete Verbindungen;

silanfunktionalisierte Allylverbindung wie z.B. Allyltrichlorsilan und Allyldichlormethylsilan;

silanfunktionalisierte Vinylverbindungen wie z.B. Vinyltrichlorsilan, Divinyldichlorsilan, Vinylmethyldichlorsilan und Trivinylchlorsilan; und

einfache Alkylchlorsilane wie z.B. Trimethylchlorsilan, Triethylchlorsilan, Dimethyldichlorsilan und Methyltrichlorsilan.

Besonders bevorzugte erfindungsgemäße Hydroxylgruppen-arme, organisch/anorganische Komposite mit geringer Wasseraufnahme werden aus den folgenden Ausgangsmaterialien (ohne Kondensationsmittel und Starter) hergestellt:

(A) 4 bis 75, bevorzugt 5 bis 50, besonders bevorzugt 5 bis 35 Mol-% Silane mit polymerisierbarer Mehrfachbindung; bevorzugte Beispiele für derartige Silane sind von Methacrylsäure, Acrylsäure,

α-Chloracrylsäure und α-Fluoracrylsäure abgeleitete Silane sowie Allyl- und Vinylsilane. Konkrete silanfimktionalisierte (Meth)acrylate sind beispielsweise (Meth)acryloxypropyltrichlorsilan, (Meth) acryloxypropylmethyldichlorsilan, (Meth)acryloxyethyltrichlorsilan, (Meth)acryloxyethylmethyldichlorsilan sowie die entsprechenden von α-Chloracrylsäure und α-Fluoracrylsäure abgeleiteten Verbindungen. In diesem Zusammenhang sei angemerkt, daß - wie auch im folgenden - statt der Chlorsilane auch die entsprechenden Alkoxysilane verwendet werden können, insbesondere die Methoxy- und Ethoxy-Verbindungen.

Konkrete silanfunktionalisierte Allylverbindungen sind z.B. Allyltrichlorsilan und Allyldichlormethylsilan, während als konkrete Beispiele für silanfunktionalisierte Vinylverbindungen Vinyltrichlorsilan, Divinyldichlorsilan, Vinylmethyldichlorsilan und Trivinylchlorsilan genannt werden können.

Schließlich sei noch angemerkt, daß auch Silane mit mehreren polymerisierbaren Mehrfachbindungen als Vernetzer eingesetzt werden können. Konkrete Beispiele hierfür sind 1,3-Bis(3-methacryloxypropyl)tetrakis(trimethylsiloxy)disiloxan und 1,3-Bis(3-methacryloxypropyl)tetramethyldisiloxan.

(B) 0 bis 85 Mol-%, vorzugsweise 10 bis 70 und besonders bevorzugt 15 bis 65 Mol-%, Silane mit fluorierten Gruppen; konkrete Beispiele für derartige Silane sind (Tridecafluor-1,1,2,2-tetrahydrooctyl) methyldichlorsilan, (Tridecafluor-1,1,2,2-tetrahydrooctyl)trichlorsilan, (Heptadecafluor-1,1,2,2-tetrahydrodecyl)-methyldichlorsilan, (Heptadecafluor-1,1,2,2-tetrahydrodecyl)trichlorsilan, Pentafluorphenyltrichlorsilan, Pentafluorphenylmethyldichlorsilan und Pentafluorphenylethyldichlorsilan.

(C) 0 bis 95, vorzugsweise 20 bis 90 und besonders bevorzugt 40 bis 80 Mol-%, fluorierte organische polymerisierbare Verbindungen wie oben definiert. Konkrete Beispiele für derartige Verbindungen sind fluorierte Styrole wie beispielsweise Pentafluorstyrol; fluorierte aromatische, cycloaliphatische oder aliphatische (Meth)acrylate wie Pentafluorphenyl (meth)acrylat, Pentafluorbenzyl(meth)acrylat, Perfluorcyclohexyl(meth)acrylat, Tetrafluorpropyl(meth)acrylat, Hexafluorbutyl(meth)acrylat, Octafluorpentyl(meth)acrylat, Dodecafluorheptyl(meth)acrylat, Perfluoroctyl(meth)acrylat, Heptadecafluordecyl(meth)acrylat, Trihydroperfluorundecyl(meth) acrylat sowie die entsprechenden von α-Fluoracrylsäure und α-Chloracrylsäure abgeleiteten Verbindungen;
polymerisierbare fluorierte Maleinsäure- und Itaconsäure-Derivate wie Bishexafluorisopropyl-itaconat, Bis-hexafluorisopropyl-maleat, Bis-perfluoroctylitaconat, Bis-perfluoroctyl-maleat, Bis-trifluorethyl-itaconat und Bis-trifluorethylmaleat;
fluorierte Allylverbindungen wie Allylheptafluorbutyrat, Allylheptafluorisopropylether, Allyl-1H, 1H-pentadecafluoroctylether, Allylpentafluorbenzol, Allylperfluorheptanoat, Allylperfluoroctanoat, Allylperfluornonanoat und Allyltetrafluorethylether;
fluorierte Vinylverbindungen wie Vinylheptafluorbutyrat, Vinylperfluorheptanoat, Vinylperfluornonanoat und Vinylperfluoroctanoat.

Als fluorierte Vernetzer können folgende konkrete Beispiele angeführt werden:

2,2,3,3-Tetrafluor-1,4-butandioldi(meth)acrylat,
1,1,5,5-Tetrahydroperfluorpentyl-1,5-di(meth) acrylat,
Hexafluorbisphenol-A-di(meth)acrylat und
Octafluorhexandiol-1,6-di(meth)acrylat.

Die Ausgangsmaterialien (B) und (C) machen zusammen vorzugsweise 25 bis 96, bevorzugter 50 bis 95 und besonders bevorzugt 65 bis 95 Mol-% aus.

(D) 0 bis 20, vorzugsweise 2 bis 15 und besonders bevorzugt 3 bis 10 Mol-% fluorfreie organische Vernetzungsmittel. Beispiele für fluorfreie Vernetzungsmittel sind Bisphenol-A-bis(meth)acrylat, Trimethylolpropantri(meth)acrylat und Neopentylglycoldi(meth)acrylat.

(E) 0 bis 14, vorzugsweise 1 bis 10 und besonders bevorzugt 2 bis 4 Mol-% polymerisiebare Monomere, die gegebenenfalls mit Deuterium und/oder Halogen substituierte aromatische Gruppen enthalten, wie z.B. Styrol, Styrol-d8, Chlorstyrol, Dichlorstyrol, Bromstyrol und Dibromstyrol.

(F) 0 bis 40 Vol-%, vorzugsweise 5 bis 30 Vol-%, Hydroxylgruppen-arme oxidische Nanopartikel wie oben beschrieben.

(G) Bis zu 30, bevorzugt bis zu 20 und besonders bevorzugt 1 bis 5 Mol-% einfache halogenierte Silane wie Trimethylchlorsilan, Dimethyldichlorsilan, Methyltrichlorsilan, Tetrachlorsilan, Tetrabromsilan und/oder Halogenide oder wahlweise Alkoxide der Elemente Ge, Sn, Ti, Zr, Hf, Al, Nb, Ta, Zn oder Mischungen der vorher genannten Verbindungen.

Zur Herstellung der erfindungsgemäßen Komposite geht man z.B. so vor, daß man die Komponenten (A) und (B) in Form der Alkoxide in einem Alkohol, wobei es sich vorzugsweise um Ethanol handelt, unter Zusatz einer wasserfreien Säure umsetzt oder die Komponenten (A) und (B) in Form der Chlorsilane mit einem geeigneten Kondensationsmittel umsetzt. Bei der Umsetzung der Alkoxide mit Säure können beispielsweise

wasserfreie HCl, HBr, HI, Essigsäure, Ameisensäure oder Trifluoressigsäure zum Einsatz kommen. Die Umsetzung erfolgt vorzugsweise durch Erhitzen unter Rückfluß. Nach Abziehen des Lösungsmittels und von leichtflüchtigen Komponenten im Vakuum kann das erhaltene Sol weiterverarbeitet werden. Besonders bevorzugt ist die Kondensation ausgehend von den Komponenten (A) und (B) in Form der Trichlorsilane und der entsprechenden Dichlormethylsilane, wobei es sich bei den Silanen mit polymerisierbaren Gruppen um Methacryl-, Acryl-, α-Chloracryl-, α-Fluoracryl-, Allyl- oder Vinylverbindungen handeln kann. Besonders bevorzugt sind dabei die Verbindungen, die eine (Meth)acrylfunktion aufweisen, insbesondere die Methacrylate. Von den optional zugesetzten Silanen mit (per)fluorierten Seitenketten werden solche besonders bevorzugt eingesetzt, die einen hohen Fluorgehalt aufweisen, insbesondere (Heptadecafluor-1,1,2,2-tetrahydrodecyl)methyldichlorsilan, (Heptadecafluor-1,1,2,2-tetrahydrodecyl)trichlorsilan, Pentafluorphenyltrichlorsilan, Pentafluorphenylmethyldichlorsilan und Pentafluorphenylethyldichlorsilan.

Die obigen Komponenten (D), (E) und (F) werden vorzugsweise nach der oben beschriebenen Herstellung des Sols diesem zugesetzt, während die obigen Komponenten (G) üblicherweise bereits bei der Herstellung des Sols mitverwendet werden.

Die Starter werden vorzugsweise erst kurz vor der Polymerisation zugegeben. Sind (Meth)acrylatgruppen vorhanden, wird als Photostarter vorzugsweise Irgacure® 184 eingesetzt, vorzugsweise in Mengen von 0,1 bis 5 Mol-%, bezogen auf die polymerisierbaren Doppelbindungen.

Zur Herstellung von Formkörpern aus den oben beschriebenen Kompositen werden beispielsweise die mit Photostarter versetzten Sole in einer UV-durchlässigen Form unter einer UV-Förderbandanlage oder unter einer UV-Lampe ausgehärtet. Gegebenenfalls wird vor der Polymerisation ein Thermostarter zugesetzt und thermisch nachgehärtet.

Zur Herstellung von Schichten aus den obigen Kompositen lassen sich die Sole, die z.B. mit Photostarter versetzt sind, durch Tauchbeschichtung, Spin Coating oder Roller Coating auf Substrate aufbringen.. Die Sole können zu diesem Zweck auch zwischen zwei ebenen Substraten verpreßt werden. Bei geeigneten Substraten kann es sich beispielsweise um solche aus Glas, Silicium, Keramik und Polymeren handeln. Die Härtung erfolgt z.B. wie im Falle der Herstellung von Formkörpern beschrieben. Erfolgt die Härtung photochemisch kann vor der Polymerisation zusätzlich Thermostarter zugegeben und thermisch nachgehärtet werden.

Die erfindungsgemäßen Komposite können vorzugsweise bei der Herstellung von Schichten, Monolithen, Klebstoffen oder Dichtmassen eingesetzt werden. Die Schichten und Monolithe sind insbesondere dadurch gekennzeichnet, daß sie eine niedrige Dämpfung im nahen Infrarot (NIR) bei 1,3 µm und 1,55 µm aufweisen.

Die folgenden Beispiele dienen der weiteren Veranschaulichung der vorliegenden Erfindung.

**REFERENZBEISPIEL 1: Synthese eines Ormocer-Systems aus einem organofunktionalisierten Trichlorsilan**

39,24 g (0,15 mol) Methacryloxypropyltrichlorsilan werden unter Rühren unter Schutzgas auf 65°C erwärmt. Man tropft über 30 Minuten 16,68 g (0,225 mol) 2-Methyl-2-propanol dazu; das entstehende Chlorwasserstoffgas läßt man über einen mit Silikonöl gefüllten Blasenzähler aus dem Reaktionskolben entweichen. Das Reaktionsgemisch wird 3 Stunden bei gleicher Temperatur weitergerührt. Anschließend gibt man weitere 16,68 g (0,225 mol) 2-Methyl-2-propanol hinzu und läßt eine weitere Stunde bei 65°C rühren. Nach Abkühlen auf Raumtemperatur werden das überschüssige 2-Methyl-2-propanol sowie entstandenes 2-Methyl-2-chlor-propanol 3 Stunden bei 0,5 mbar abdestilliert. Im IR-Spektrum (FT-IR-Spektrometer IFS 66v, Bruker, mit evakuierbarer Messkammer, gemessen zwischen zwei KBr-Fenstern) ist nur noch eine sehr schwache Bande im Wellenzahlbereich von 3600 bis 3300 $cm^{-1}$ nachzuweisen, die auf restliche OH-Gruppen zurückzuführen ist.

Anschließend werden ca. 8 ml Trimethylchlorsilan zügegeben und das Reaktionsgemisch wird unter Schutzgas bei leichtem Rückfluß 1 h gekocht. Nach Abkühlen auf Raumtemperatur werden erneut die leichtflüchtigen Bestandteile bei 0,5 mbar abdestilliert. Weitere Kondensationsreaktionen während der Behandlung mit Trimethylchlorsilankönnen mittels $^{29}$Si-NMR-Spektroskopie durch eine Erhöhung der Signale der $T^2$- (-53 bis -62 ppm) und $T^3$-Gruppen (-64 bis -72 ppm) und das Verschwinden der $T^1$-Signale (-47 bis -51 ppm) nachgewiesen werden. Eine Verringerung der IR-Bande von 3600 bis 3300 $cm^{-1}$ zeigt zusätzlich eine weitere Reduzierung des OH-Gehaltes an. Der fertige Sol kann sofort verarbeitet werden.

**REFERENZBEISPIEL 2: Synthese eines wasserfreien Ormocer-Systems aus einem organofunktionalisierten Dichlorsilan**

36,18 g (0,15 mol) Methacryloxypropyl-methyl-dichlorsilan werden unter Rühren unter Schutzgas auf 65°C erwärmt. Man tropft über 30 Minuten 11,12 g (0,15 mol) 2-Methyl-2-propanol dazu; das entstehende Chlorwasserstoffgas läßt man über einen mit Silikonöl gefüllten Blasenzähler aus dem Reaktionskolben entweichen. Das Reaktionsgemisch wird 24 Stunden bei gleicher Temperatur weitergerührt. Anschließend gibt man weitere 11,12 g (0,15 mol) 2-Methyl-2-propanol hinzu und läßt weitere zwei Stunden bei 65°C rühren. Nach Abkühlen auf Raumtemperatur werden das überschüssige 2-Methyl-2-propanol sowie entstandenes

2-Methyl-2-chlor-propanol bei 0,5 mbar abdestilliert. Eine Nachsilanisierung mit Trimethylchlorsilan ist nicht erforderlich, da sich mittels $^{29}Si$-NMR-Spektroskopie nur zweifach verknüpfte Siloxane nachweisen lassen.

**BEISPIEL 1: Synthese eines fluorfunktionalisierten Ormocer-Sols durch Cokondensation von organofunktionalisierten und fluoralkylfunktionalisierten Dichlorsilanen**

12,06 g (0,05 mol) Methacryloxypropyl-methyl-dichlorsilan und 46,11 g (0,1 mol) 1H,1H,2H,2H-Tridecafluoroctyl-methyl-dichlorsilanwerdenunter Rührenunter Schutzgas auf 65°C erwärmt. Man tropft über 30 Minuten 11,12 g (0,15 mol) 2-Methyl-2-propanol dazu; das entstehende Chlorwasserstoffgas läßt man über einen mit Silikonöl gefüllten Blasenzähler aus dem Reaktionskolben entweichen. Das Reaktionsgemisch wird 24 Stunden bei gleicher Temperatur weitergerührt. Anschließend gibt man weitere 14,82 g (0,2 mol) 2-Methyl-2-propanol hinzu und läßt zwei weitere Stunden bei 65 ° C rühren. Nach Abkühlen auf Raumtemperatur werden das überschüssige 2-Methyl-2-propanol sowie entstandenes 2-Methyl-2-chlor-propanol 3 Stunden bei 0,5 mbar abdestilliert. Das Vorliegen von Cokondensaten läßt sich $^{29}Si$-NMR-spektroskopisch anhand der stark verbreiteren $D^2$-Bande bei -16 bis.-24 ppm im Vergleich zu den Spektren aus Referenzbeispiel 1 nachweisen. Eine Nachsilanisierung mit Trimethylchlorsilan ist nicht erforderlich, da der mittels $^{29}Si$-NMR-Spektroskopie ermittelte Gehalt an einfach verknüpften Siloxangruppen unter 3% liegt.

**BEISPIEL 2: Synthese eines fluorfunktionalisierten Ormocer-Sols durch Cokondensation von organofunktionalisierten Dichlorsilanen und fluoralkylfunktionalisierten Trichlorsilanen**

12,06 g (0,05 mol) Methacryloxypropyl-methyl-dichlorsilan und 24,08 g (0,05 mol) 1H,1H,2H-2H-Tridecafluoroctyl-trichlorsilan werden unter Rühren unter Schutzgas auf 65°C erwärmt. Man tropft über 30 Minuten 9,27 g (0,125 mol) 2-Methyl-2-propanol dazu; das entstehende Chlorwasserstoffgas läßt man über einen mit Silikonöl gefüllten Blasenzähler aus dem Reaktionskolben entweichen. Das Reaktionsgemisch wind 24 Stunden bei gleicher Temperatur weitergerührt. Anschließend gibt man weitere 9,27 g (0,125 mol) 2-Methyl-2-propanol hinzu und läßt zwei weitere Stunden bei 65 °C rühren. Nach Abkühlen auf Raumtemperatur werde das überschüssige 2-Methyl-2-propanol sowie entstandenes 2-Methyl-2-chlor-propanol bei 0,5 mbar abdestilliert. Das. Vorliegen von Cokondensaten läßt sich $^{29}Si$-NMR-spektroskopisch anhand der stark verbreiterten $D^2$-Bande bei -16 bis -24 ppm im Vergleich zu den Spektren aus Referenzbeispiel 1 nachweisen.

**REFERENZBEISPIEL 3: Photopolymerisation eines OH-armen, nicht fluorhaitigen Ormocer-Systems**

Zu 5 g des in Referenzbeispiel 1 aus Methacryloxypropyltrichlorsilan hergestellten Sols werden in einem lichtgeschützten Kolben 50 mg Irgacure® 184 gegeben und unter Rühren gelöst. Das Gemisch wird dann in eine UV-transparente zylindrische Form gegeben und in einer UV-Förderbandanlage (Beltron®) innerhalb von 10 Zyklen mit einer Geschwindigkeit von 2,5m/min über eine Länge von 0,6 m bei einer Gesamtenergiedichte von 2,5 J/cm$^2$ pro Zyklus (gemessen im Wellenlängenbereich von 280 bis 320 nm) ausgehärtet, wobei eine starke Erwärmung der Probe die Photopolymerisation anzeigt.

Der so erhaltene Formkörper wird dann mittels permanenter ölbasierter Diamant-Suspensionen (Metadi®, Wirtz Buehler) mit fallenden Partikeldurchmessern (9, 3 und 1 μm) planparallel poliert. Mittels NIR-Spektroskopie (NIR-UV/VIS-Spektrometer Omega 20, Bruins Instruments) werden optische Dämpfungswerte von 1,0 bis 1,2 cB/cm bei 1550 nm und ≤0,2 dB/cm bei 1300 nm gemessen. Die Verwendung wäßriger $Al_2O_3$-Suspensionen mit entsprechenden Partikelgrößen beim Polieren führt zu keiner Verschlechterung der Dämpfungswerte.

**BEISPIEL 3: Photopolymerisation eines OH-armen fluorhaltigen Ormocer-Systems**

Zu 5 g des in Beispiel 1 durch Cokondensation von Methacryloxypropyl-methyl-dichlorsilan mit 1H,1H, 2H,2H-Tridecafluoroctyl-methyl-dichlorsilan hergestellten Sols werden in einem lichtgeschützten Kolben 50 mg Irgacure® 184 gegeben und unter Rühren gelöst. Das Gemisch wird dann in eine UV-transparente zylindrische Form gegeben und in einer UV-Förderbandanlage (Beltron®) innerhalb von 10 Zyklen mit einer Geschwindigkeit von 2,5 m/min über eine Länge von 0,6 m bei einer Gesamtenergiedichte von 2,5 J/cm$^2$ pro Zyklus (gemessen im Wellenlängenbereich von 280 bis 320 nm) ausgehärtet, wobei eine starke Erwärmung der Probe die Photopolymerisation anzeigt.

Der so erhaltene Formkörper wird dann mittels permanenter ölbasierter Diamant-Suspensionen (Metadi®, Wirtz Buehler) mit fallenden Partikeldurchmessern (9, 3 und 1 μm) planparallel poliert. Mittels NIR-Spektroskopie werden optische Dämpfungswerte von 0,7 bis 0,8 dB/cm bei 1550 nm und ≤ 0,2 dB/cm bei 1300 nm gemessen. Die Verwendung wäßriger $Al_2O_3$-Suspensionen mit entsprechenden Partikelgrößen beim Polieren führt zu keiner Verschlechterung der Dämpfungswerte.

**BEISPIEL 4: Copolymerisation eines OH-armen, nicht fluorhaltigen Ormocer-Systems mit Fluoralkylmethacrylaten**

Zu einer Mischung aus 1,2 g des in Referenzbeispiel 2 aus Methacryloxypropyl-methyl-dichlorsilan hergestellten Sols mit 2,4 g 1H,1H,5H,-Octafluorpentylmethacrylat werden in einem lichtgeschützten Kolben 120 mg Irgacure® 184 gegeben und unter Rühren gelöst. Das Gemisch wird dann in eine UV-transparente zylindrische Form gegeben und in einer UV-Förderbandanlage (Beltron®) innerhalb von 10 Zyklen mit einer Geschwindigkeit von 2,5 m/min über eine Länge von 0,6 m bei einer Gesamtenergiedichte von 2,5 J/$cm^2$ pro Zyklus (gemessen im Wellenlängenbereich von 280 bis 320 nm) ausgehärtet, wobei eine starke Erwärmung der Probe die Photopolymerisation anzeigt.

Der so erhaltene Formkörper wird dann mittels permanenter ölbasierter Diamant-Suspensionen (Metadi®, Wirtz Buehler) mit fallenden Partikeldurchmessern (9, 3 und 1 µm) planparallel poliert. Mittels NIR-Spektroskopie werden optische Dämpfungswerte von 0,6 bis 0,7 dB/cm bei 1550 nm und ≤ 0,1 dB/cm bei 1300 nm gemessen. Die Verwendung wäßriger $Al_2O_3$-Suspensionen mit entsprechenden Partikelgrößen beim Polieren führt zu keiner Verschlechterung der Dämpfungswerte.

**BEISPIEL 5: Copolymerisation eines OH-armen, fluorhaltigen Ormocer-Systems mit Fluoralkylmetimcrylaten**

Zu einer Mischung aus 1,2 g des in Beispiel 1 durch Cokondensation von Methacryloxypropyl-methyldichlorsilan und 1H,1H,2H,2H-Tridecafluoroctyl-methyldichlorsilan hergestellten Sols mit 1H,1H,2H, 2H-Heptadecafluordecylmethacrylat werden in einem lichtgeschützten Kolben 120 mg Irgacure® 184 gegeben und unter Rühren gelöst. Das Gemisch wird dann in eine UV-transparente zylindrische Form gegeben und in einer UV-Förderbandanlage (Beltron®) innerhalb von 10 Zyklen mit einer Geschwindigkeit von 2,5 m/min über eine Länge von 0,6 m bei einer Gesamtenergiedichte von 2,5 J/$cm^2$ pro Zyklus und einer Geschwindigkeit von 2,5 m/min innerhalb von 10 Zyklen ausgehärtet, wobei eine starke Erwärmung der Probe die Photopolymerisation anzeigt.

Der so erhaltene Formkörper wird dann mittels permanenter ölbasierter Diamant-Suspensionen (Metadi®, Wirtz Buehler) mit fallenden Partikeldurchmessern (9, 3 und 1 µm) planparallel poliert. Mittels NIR-Spektroskopie werden optische Dämpfungswerte von 0,3 bis 0,4 dB/cm bei 1550 nm und ≤ 0,1 dB/cm bei 1300 nm gemessen. Die Verwendung wäßriger $Al_2O_3$-Suspensionen mit entsprechenden Partikelgrößen beim Polieren führt zu keiner Verschlechterung der Dämpfungswerte.

**BEISPIEL 6: $SiO_2$-Nanopartikel aus Siliciumtetrachlorid und t-Butanol**

In ein 100 ml-Schlenkrohr werden nach 10-minütigem Spülen mit Stickstoff 50 ml Chloroform und 100 mmol (9,38 ml) tert.-Butanol gegeben. Das Schlenkrohr wird unter Rückfluß auf 50 °C aufgeheizt. Nach 10-minütigem Erhitzen wird der Ansatz unter starkem Rühren mit 10 mmol (1,14 ml) Siliciumtetrachlorid versetzt und weitere 5 Minuten unter Rückfluß gerührt. Anschließend wird durch ein Eisbad rasch auf 0°C abgekühlt. Die flüchtigen Reste im Reaktionsgemisch werden im Vakuum (>3 mbar) entfernt. Anschließend werden 5 ml Chloroform und 6 ml Trivinylchlorsilan zugesetzt. Danach wird das Reaktionsgemisch wieder für 2 Stunden auf eine Temperatur von 50°C gebracht und anschließend bei Raumtemperatur über Nacht stark gerührt. Der flüchtige Anteil wird nochmals im Vakuum (> 3 mbar) abgezogen. Das Produkt ist flüssig, was wahrscheinlich durch hochsiedende Nebenprodukte verursacht ist, und kann unter Luft weiterverarbeitet werden. Transmissionselektronenmikroskopisch wurden die Teilchendurchmesser zu 20 nm bestimmt. Das Sol weist bei 656,3 nm einen Brechungsindex von 1,46637 auf. Eine Dämpfungsmessung bei 1550 nm ergibt einen optischen Verlust von 0,5 dB/cm (Spektrometer: Omega 20, Fa. Bruins Instruments, 1cm-Küvette, Referenz: Luft).

**BEISPIEL 7: Herstellung eines Monolithen aus einem Komposit von $SiO_2$-Nanopartikeln in vernetztem Polyoctafluorpentyl-methacrylat**

2,366 g (8,22 mmol) Octafluorpentylmethacrylat werden mit 0,333 g (0,913 mmol) Bisphenol A-bismethacrylat gemischt. Anschließend werden 0,065 g (2,7 Gew.-%, bezogen auf die Monomermischung) Photostarter IRGACURE® 184 zugesetzt. Nachdem sich der Photostarter vollständig im Monomergemisch gelöst hat, werden 0,2741 g $SiO_2$-Nanopartikel, hergestellt nach der Vorschrift von Beispiel 6, zugesetzt und die Mischung wird in eine 2 ml Plastikspritze überführt. Nachdem die Mischung blasenfrei ist, wird die Probe einer UV-Härtung unterzogen. Dabei wird ein UV-Bestrahlungstransportband (Fa. Beltron) eingesetzt. Für die ersten vier Durchgäge wird eine Bestrahlungsleistung von 2 J/$cm^2$ (kleine Lampe, volle Leistung, 4 m/min) eingestellt. Dann wird die Probe bei einer Bestrahlungsleistung von 1 J/$cm^2$ (kleine Lampe, halbe Leistung, 4 m/min.) solange weiterbehandelt, bis keine Wärmeentwicklung mehr feststellbar ist (weitere 10-15 Durchläufe).

Der so erhaltene Formkörper wird dann mittels permanenter ölbasierter Diamant-Suspensionen (Metadi®, Wirtz Buehler) mit fallenden Partikeldurchmessern (9, 3 und 1 µm) planparallel poliert. Der Formkörper ist transparent und weist einen optischen Verlust von 0,4 dB/cm bei 1550 nm auf (Spektrometer: Omega 20, Fa. Bruins Instruments, Referenz: Luft).

## Patentansprüche

1. Verfahren zur Herstellung Hydroxylgruppen-armer organisch/anorganischer Komposite, umfassend

   (1) die nicht-hydrolytische Kondensation eines oder mehrerer Silane, von denen zumindest ein Teil über eine über eine Si-C-Bindung an Si gebundene Gruppe mit mindestens einer polymerisierbaren C-C-Doppeloder Dreifachbindung verfügt, wobei gegebenenfalls weitere nicht zur Kondensation heranziehbare Gruppen an den Si-Atomen der Silane aus fluorhaltigen Gruppen ausgewählt werden können; und

   (2) die thermische und/oder photochemische Polymerisation des Kondensationsprodukts von Stufe (1);

   wobei das Kondensationsprodukt, sofern es keine fluorhaltigen Gruppen umfaßt, vor der Polymerisation mit mindestens einer fluorierten, mit dem Kondensationsprodukt copolymerisierbaren organischen Verbindung und/oder mit Hydroxylgruppenarmen Nanopartikeln versetzt wird.

2. Verfahren nach Anspruch 1, umfassend

   (a) die nicht-hydrolytische Kondensation mindestens eines Chlorsilans der allgemeinen Formel (1)

   $$R^1{}_aR^2{}_bSi(Cl)_c \quad (1)$$

   in welcher
   $R^1$ eine über eine Si-C-Bindung an Si gebundene Gruppe mit mindestens einer polymerisierbaren Kohlenstoff-Kohlenstoff-Doppel- oder Dreifach-, bindung ist,
   $R^2$ eine gegebenenfalls substituierte, gesättigte oder aromatische Kohlenwasserstoffgruppe darstellt,
   a = 1 oder 2,
   b = 0 oder 1,
   c = 2 oder 3,
   wobei (a+b+c) = 4;
   gegebenenfalls in Kombination mit

   (i) mindestens einem Chlorsilan der allgemeinen Formel (2)

   $$R^1{}_dR^2{}_eSi(Cl)_f \quad (2)$$

   in welcher
   $R^1$ und $R^2$ wie oben definiert sind,
   d = 0 oder 3,
   e = 0, 1, 2 oder 3,
   f = 1, 2 oder 3,
   wobei (d+e+f) = 4 und für d = 3 und e = 2 oder 3 die Gruppen $R^1$ bzw. $R^2$ gleich oder verschieden sein können; und/oder
   (ii) mindestens einer aus den Tetrachloriden und Tetrabromiden von Ge, Si, Ti und Zr sowie $AlCl_3$ und $AlBr_3$ ausgewählten Verbindung;

   mit Hilfe eines zur nicht-hydrolytischen Kondensation der obigen Halogenverbindungen befähigten Kondensationsmittels; oder
   (a') die Kondensation mindestens eines Alkoxysilans der allgemeinen Formel (3)

   $$R^1{}_aR^2{}_bSi(OR)_c \quad (3)$$

   in welcher
   $R^1$, $R^2$, a, b und c wie oben definiert sind; R für Alkyl steht;
   gegebenenfalls in Kombination mit.

   (i') mindestens einem Alkoxysilan der allgemeinen Formel (4)

   $$R^1{}_dR^2{}_eSi(OR)_f \quad (4)$$

   in welcher
   $R^1$, $R^2$, R, d, e und f wie oben definiert sind; und/oder
   (ii') mindestens einer Verbindung der allgemeinen Formel (5)

   $$M(OR)_g \quad (5)$$

   in welcher
   R wie oben definiert ist,
   M = Ge, Ti, Zr oder Al,
   g = 3 im Falle von M = Al und ansonsten g = 4;

   mit Hilfe einer wasserfreien Säure;
   und
   (b) die thermische und/oder photochemische Polymerisation des Kondensationsprodukts von Stufe (a) oder (a').

3. Verfahren nach Anspruch 2, **dadurch gekennzeichnet, daß** das Kondensationsmittel in Variante (a) aus t-Butanol, Benzylalkohol, Benzaldehyd, Tetrabenzoxysilan, Diisopropylether, Diethylether, Dibenzylether und Trifluoressigsäure ausgewählt

wird.

**4.** Verfahren nach irgendeinem der Ansprüche 2 und 3, **dadurch gekennzeichnet, daß** der Anteil an Silanen der allgemeinen Formeln (1) und/oder (3) an allen vorhandenen kondensierbaren Verbindungen 5 bis 100 Mol-% beträgt

**5.** Verfahren nach irgendeinem der Ansprüche 2 bis 4, **dadurch gekennzeichnet, daß** die Gruppen $R^1$ Gruppen der Formel $H_2C=CR^3-CO-O-(CH_2)_n-CH_2-$ mit $R^3$ = H, $CH_3$, F oder Cl und n = 1 - 5 und/oder Gruppen der Formel $H_2C=CH-(CH_2)_m$mit m = 0 oder 1 umfassen.

**6.** Verfahren nach irgendeinem der Ansprüche 2 bis 5, **dadurch gekennzeichnet, daß** die Gruppen $R^2$ Alkylgruppen und/oder Fluoralkylgruppen mit mindestens 3 Fluoratomen umfassen.

**7.** Verfahren nach Anspruch 6, **dadurch gekennzeichnet, daß** die Alkylgruppen Methyl- und/oder Ethylgruppen sind.

**8.** Verfahren nach irgendeinem der Ansprüche 2 bis 7, **dadurch gekennzeichnet, daß** a in der allgemeinen Formel (1) oder (3) gleich 1 ist.

**9.** Verfahren nach irgendeinem der Ansprüche 2 bis 8, **dadurch gekennzeichnet, daß** in der allgemeinen Formel (2) oder (4) d = 0, e = 0, 1 oder 2 und f = 2 oder 3.

**10.** Verfahren nach irgendeinem der Ansprüche 1 bis 9, **dadurch gekennzeichnet, daß** die Polymerisation von Stufe (2) bzw. (b) eine Copolymerisation des Polykondensats mit mindestens einer organischen Verbindung, die kein von C, H, D, O, N und Halogen verschiedenes Element enthält und über eine einzelne polymerisierbare Kohlenstoff-Kohlenstoff-Doppel- oder Dreifachbindung verfügt, umfaßt.

**11.** Verfahren nach Anspruch 10, **dadurch gekennzeichnet, daß** die organische Verbindung eine Verbindung mit mindestens 3 Fluoratomen im Molekül umfaßt.

**12.** Verfahren nach Anspruch 11, **dadurch gekennzeichnet, daß** die fluorierte organische Verbindung eine aliphatische Gruppe mit mindestens 2 Kohlenstoffatomen oder eine aromatische Gruppe ist und mindestens 4 Fluoratome aufweist.

**13.** Verfahren nach irgendeinem der Ansprüche 11 und 12, **dadurch gekennzeichnet, daß** die fluorierte organische Verbindung aus ganz oder teilweise fluoriertem Styrol, ganz oder teilweise fluorierten Estem von einfach ungesättigten Mono- und Polycarbonsäuren, fluorierten Allylverbindungen und fluorierten Vinylverbindungen und Mischungen davon ausgewählt wird.

**14.** Verfahren nach irgendeinem der Ansprüche 10 bis 13, **dadurch gekennzeichnet, daß** zusätzlich zu oder anstelle der organischen Verbindung mit einer einzelnen polymerisierbaren Kohlenstoff-Kohlenstoff-Doppel- oder Dreifachbindung ein gegebenenfalls fluoriertes und/oder silanfunktionalisiertes Vernetzungsmittel mit mindestens 2 derartigen polymerisierbaren Bindungen eingesetzt wird.

**15.** Verfahren nach irgendeinem der Ansprüche 1 bis 14, **dadurch gekennzeichnet, daß** in Stufe (2) bzw. (b) zusätzlich ein Thermostarter und/oder ein Photostarter verwendet wird.

**16.** Verfahren nach irgendeinem der Ansprüche 1 bis 15, **dadurch gekennzeichnet, daß** die Polymerisation in Stufe (2) bzw. (b) photochemisch erfolgt, woran sich gegebenenfalls eine thermische Nachbehandlung anschließt

**17.** Verfahren zur Herstellung von Hydroxylgruppen-armen oxidischen Nanopartikeln, umfassend die Umsetzung mindestens eines Chlorids, Bromids oder lodids von Ge, Sn, Si, Ti, Zr, Hf, Al, Zn, Nb oder Ca mit einem zur nicht-hydrolytischen Kondensation dieser Halogenide befähigten Kondensationsmittel in einem gegenüber den Reaktanten und Produkten inerten Lösungsmittel und gegebenenfalls anschließend die Umsetzung der so gebildeten Nanopartikel mit einem Oberflächenmodifizierungsmittel, das die an den Oberflächen der Nanopartikel vorhandenen Reste des Kondensationsmittels durch Reste mit Gruppen mit polymerisierbaren Bindungen und/oder Alkylgruppen ersetzen kann.

**18.** Verfahren nach Anspruch 17, **dadurch gekennzeichnet, daß** die zu kondensierende Verbindung aus $SiCl_4$, $SiBr_4$ und $SiI_4$ ausgewählt wird.

**19.** Verfahren nach irgendeinem der Ansprüche 17 und 18, **dadurch gekennzeichnet, daß** das Kondensationsmittel aus t-Butanol, Benzylalkohol, Benzaldehyd, Tetrabenzoxysilan, Diisopropylether, Diethylether, Dibenzylether und Trifluoressigsäure ausgewählt wird.

**20.** Verfahren nach irgendeinem der Ansprüche 17 bis 19, **dadurch gekennzeichnet, daß** das Molverhältnis von Halogenatomen in der zu kondensierenden Verbindung zu Kondensationsmittel 1:1 bis 1:50 beträgt.

**21.** Verfahren nach irgendeinem der Ansprüche 17 bis

20, **dadurch gekennzeichnet, daß** das Lösungsmittel einen halogenierten aliphatischen Kohlenwasserstoff umfaßt.

**22.** Verfahren nach irgendeinem der Ansprüche 17 bis 21, **dadurch gekennzeichnet, daß** das Lösungsmittel Methylenchlorid und/oder Chloroform umfaßt.

**23.** Verfahren nach irgendeinem der Ansprüche 17 bis 22, **dadurch gekennzeichnet. daß** die Kondensation bei erhöhter Temperatur bis zum Siedepunkt des eingesetzten Kondensationsmittels oder des eingesetzten Lösungsmittels durchgeführt wird.

**24.** Verfahren nach irgendeinem der Ansprüche 17 bis 23, **dadurch gekennzeichnet, daß** die Kondensation in Anwesenheit eines Katalysators durchgeführt wird.

**25.** Verfahren nach irgendeinem der Ansprüche 17 bis 24, **dadurch gekennzeichnet, daß** nach erfolgter Kondensation die flüchtigen Bestandteile des Reaktionsgemisches entfernt werden.

**26.** Verfahren nach irgendeinem der Ansprüche 17 bis 25, **dadurch gekennzeichnet, daß** es sich bei dem gegebenenfalls eingesetzten Oberflächenmodifizierungsmittel um mindestens ein Chlorsilan der allgemeinen Formel (1) oder (2), wie in irgendeinem der Ansprüche 2 und 5 bis 9 definiert, handelt.

**27.** Hydroxylgruppen-arme oxidische Nanopartikel, erhältlich nach dem Verfahren gemäß irgendeinem der Ansprüche 17 bis 26.

**28.** Verfahren zur Herstellung von fluorhaltigen, Hydroxylgruppen-armen organisch/anorganischen Kompositen, umfassend die thermische und/oder photochemische Polymerisation mindestens einer fluorhaltigen Verbindung mit mindestens einer polymerisierbaren Kohlenstoff-Kohlenstoff-Doppel- oder Dreifachbindung in Anwesenheit von oxidischen Nanopartikeln nach Anspruch 27.

**29.** Verfahren nach Anspruch 28, **dadurch gekennzeichnet, daß** es sich bei der fluorhaltigen Verbindung um mindestens ein wie in irgendeinem der Ansprüche 2 bis 9 definiertes fluorhaltiges Kondensationsprodukt und/oder mindestens eine fluorhaltige polymerisierbare organische Verbindung wie in irgendeinem der Ansprüche 11 bis 14 definiert handelt.

**30.** Hydroxylgruppen-arme organisch/anorganische Komposite, erhältlich nach dem Verfahren gemäß irgendeinem der Ansprüche 1 bis 16, 28 und 29.

**31.** Komposite nach Anspruch 30 in Form von Formkörpern oder Schichten.

**32.** Verwendung der Komposite nach irgendeinem der Ansprüche 30 und 31 zur Herstellung von Formkörpem, Schichten, Monolithen, Klebstoffen und Dichtmassen.

**33.** Fluorierte Kondensationsprodukte, erhältlich nach dem Verfahren gemäß den Ansprüchen 1 und 2, Stufen (1) bzw. (a) und (a').

**Claims**

**1.** Process for the preparation of organic/inorganic composites lean in hydroxyl groups, comprising

(1) the non-hydrolytic condensation of one or more silanes at least a part whereof has a group which features at least one polymerizable C-C double or triple bond and is linked to Si via an Si-C bond, any other groups on the Si atoms of the silanes which are not usable for condensation being optionally selected from fluorinated groups; and
(2) the thermal and/or photochemical polymerization of the condensation product of step (1);

wherein said condensation product, if it does not comprise fluorinated groups, is admixed before polymerisation with at least one fluorinated organic compound which is copolymerizable with said condensation product and/or with nanoscale particles lean in hydroxyl groups.

**2.** Process according to Claim 1, comprising

(a) the non-hydrolytic condensation of at least one chlorosilane of general formula (1)

$$R^1{}_aR^2{}_bSi(Cl)_c \qquad (1)$$

wherein
$R^1$ represents a group having at least one polymerizable carbon-carbon double or triple bond and is linked to Si via an Si-C bond,
$R^2$ is an optionally substituted, saturated or aromatic hydrocarbon group,
a = 1 or 2,
b = 0 or 1,
c = 2 or 3,
wherein (a + b + c) = 4;
optionally in combination with

(i) at least one chlorosilane of general for-

mula (2)

$$R^1{}_dR^2{}_eSi(Cl)_f \qquad (2)$$

wherein
$R^1$ and $R^2$ are as defined above,
d = 0 or 3,
e = 0, 1, 2 or 3,
f = 1, 2 or 3,
wherein (d + e + f) = 4 and for d = 3 and e = 2 or 3 the groups $R^1$ and $R^2$, respectively may be the same or different; and/or
(ii) at least one compound selected from tetrachlorides and tetrabromides of Ge, Si, Ti and Zr as well as $AlCl_3$ and $AlBr_3$;

by means of a condensing agent capable of non-hydrolytically condensing the above halogen compounds; or
(a') the condensation of at least one alkoxysilane of general formula (3)

$$R^1{}_aR^2{}_bSi(OR)_c \qquad (3)$$

wherein
$R^1$, $R^2$, a, b and c are as defined above; R is alkyl;
optionally in combination with

(i') at least one alkoxysilane of general formula (4)

$$R^1{}_dR^2{}_eSi(OR)_f \qquad (4)$$

wherein
$R^1$, $R^2$, R, d, e and f are as defined above; and/or
(ii') at least one compound of general formula (5)

$$M(OR)_g \qquad (5)$$

wherein
R is as defined above,
M = Ge, Si, Ti, Zr or Al,
g = 3 in case of M = Al and g = 4 in all other cases;

by means of an anhydrous acid; and
(b) the thermal and/or photochemical polymerization of the condensation product of step (a) or (a').

**3.** Process according to Claim 2, **characterized in that** the condensing agent in alternative (a) is selected from t-butanol, benzyl alcohol, benzaldehyde, tetrabenzoxysilane, diisopropylether, diethylether, dibenzylether and trifluoroacetic acid.

**4.** Process according to any one of Claims 2 and 3, **characterized in that** the proportion of silanes of general formulae (1) and/or (3) of all condensable compounds present ranges from 5 to 100 mole %.

**5.** Process according to any one of Claims 2 to 4, **characterized in that** the groups $R^1$ comprise groups of formula $H_2C{=}CR^3\text{-CO-O-}(CH_2)_n\text{-}CH_2\text{-}$, wherein $R^3$ = H, $CH_3$, F or Cl and n = 1-5 and/or groups of formula $H_2C{=}CH\text{-}(CH_2)_m\text{-}$, wherein m =0 or 1.

**6.** Process according to any one of Claims 2 to 5, **characterized in that** the groups $R^2$ comprise alkyl groups and/or fluoroalkyl groups having at least 3 fluorine atoms.

**7.** Process according to Claim 6, **characterized in that** the alkyl groups are methyl and/or ethyl groups.

**8.** Process according to any one of Claims 2 to 7, **characterized in that** a in general formula (1) or (3) equals 1.

**9.** Process according to any one of Claims 2 to 8, **characterized in that** in general formula (2) or (4) d = 0, e = 0, 1 or 2, and f = 2 or 3.

**10.** Process according to any one of Claims 1 to 9, **characterized in that** the polymerization of step (2) and (b), respectively comprises a copolymerization of the polycondensate with at least one organic compound which is free of any element different from C, H, D, O, N and halogen and has a single polymerizable carbon-carbon double or triple bond.

**11.** Process according to Claim 10, **characterized in that** said organic compound is a compound having at least 3 fluorine atoms in its molecule.

**12.** Process according to Claim 11, **characterized in that** said fluorinated organic compound is an aliphatic group having at least 2 carbon atoms, or is an aromatic and has at least 4 fluorine atoms.

**13.** Process according to any one of Claims 11 and 12, **characterized in that** said fluorinated organic compound is selected from wholly or partially fluorinated styrene, wholly or partially fluorinated esters of monounsaturated mono- and polycarboxylic acids, fluorinated allyl compounds and fluorinated vinyl compounds and mixtures thereof.

**14.** Process according to any one of Claims 10 to 13, **characterized in that** in addition to or instead of said organic compound having a single polymerizable carbon-carbon double or triple bond an optionally fluorinated crosslinking agent and/or a crosslinking agent having silane functionality featuring at least 2 such polymerizable bonds is employed.

**15.** Process according to any one of Claims 1 to 14, **characterized in that** in step (2) and (b), respectively a thermal initiator and/or a photoinitiator is additionally employed.

**16.** Process according to any one of Claims 1 to 15, **characterized in that** the polymerization in step (2) and (b), respectively is conducted photochemically, whereafter a thermal post-treatment is optionally carried out.

**17.** Process for the preparation of oxidic nanoparticles lean in hydroxyl groups, comprising the reaction of at least one chloride, bromide or iodide of Ge, Sn, Si, Ti, Zr, Hf, Al, Zn, Nb or Ca with a condensing agent capable of non-hydrolytically condensing said halides in a solvent which is inert to the reactants and products, and optionally the subsequent reaction of the nanoparticles thus formed with a surface modifier which is capable of replacing the radicals derived from the condensing agent present on the surfaces of said nanoparticles with radicals with groups having polymerizable bonds and/or alkyl groups.

**18.** Process according to Claim 17, **characterized in that** the compound to be condensed is selected from $SiCl_4$, $SiBr_4$ and $SiI_4$.

**19.** Process according to any one of Claims 17 and 18, **characterized in that** the condensing agent is selected from t-butanol, benzyl alcohol, benzaldehyde, tetrabenzoxy silane, diisopropylether, diethylether, dibenzylether and trifluoroacetic acid.

**20.** Process according to any one of Claims 17 to 19, **characterized in that** the molar ratio of halogen atoms in the compound to be condensed to condensing agent is 1:1 to 1:50.

**21.** Process according to any one of Claims 17 to 20, **characterized in that** the solvent comprises a halogenated aliphatic hydrocarbon.

**22.** Process according to any one of Claims 17 to 21, **characterized in that** said solvent is methylene chloride and/or chloroform.

**23.** Process according to any one of Claims 17 to 22, **characterized in that** said condensation is carried out at elevated temperature up to the boiling point of the employed condensing agent or the employed solvent.

**24.** Process according to any one of Claims 17 to 23, **characterized in that** said condensation is carried out in the presence of a catalyst.

**25.** Process according to any one of Claims 17 to 24, **characterized in that** after the condensation has been conducted the volatile components of the reaction mixture are removed.

**26.** Process according to any one of Claims 17 to 25, **characterized in that** said optionally employed surface modifier is at least one chlorosilane of general formula (1) or (2), as defined in any one of Claims 2 and 5 to 9.

**27.** Oxidic nanoparticles lean in hydroxyl groups, obtainable according to the process according to any one of Claims 17 to 26.

**28.** Process for the preparation of fluorine containing organic/inorganic composites lean in hydroxyl groups, comprising the thermal and/or photochemical polymerization of at least one fluorine containing compound having at least one polymerizable carbon-carbon double or triple bond in the presence of oxidic nanoparticles according to Claim 27.

**29.** Process according to Claim 28, **characterized in that** the fluorine containing compound is at least one fluorine containing condensation product as defined in any one of Claims 2 to 9 and/or at least one fluorine containing polymerizable organic compound as defined in any one of Claims 11 to 14.

**30.** Organic/inorganic composites lean in hydroxyl groups, obtainable according to the process according to any one of Claims 1 to 16, 28 and 29.

**31.** Composite according to Claim 30 in the form of molded articles or layers.

**32.** Use of the composites according to any one of Claims 30 and 31 in the manufacture of molded articles, layers, monoliths, adhesives and sealants.

**33.** Fluorinated condensation products, obtainable according to the process of Claims 1 and 2, step (1) and (a) and (a'), respectively.

**Revendications**

**1.** Procédé de fabrication de matériaux composites organo-minéraux pauvres en groupes hydroxyle, comprenant

(1) la condensation non hydrolytique d'un ou de plusieurs silanes, dont au moins une partie dispose d'un groupe à double ou triple liaison carbone-carbone polymérisable, lié par l'intermédiaire d'une liaison Si-C à un atome de silicium, d'autres groupes liés aux atomes de silicium, éventuellement présents et non susceptibles de subir une réaction de condensation, pouvant être choisis parmi les groupes fluorés, et
(2) la polymérisation thermique et/ou photochimique du produit de condensation de l'étape (1),

le produit de condensation, au cas où il ne contient pas de groupes fluorés, étant mélangé, avant l'étape de polymérisation, avec au moins un composé organique fluoré susceptible d'être copolymérisé avec le produit de condensation et/ou avec des nanoparticules pauvres en groupes hydroxyle.

**2.** Procédé selon la revendication 1, comprenant

(a) la condensation non hydrolytique d'au moins un chlorosilane de formule générale (1)

$$(1) \qquad R^1{}_aR^2{}_bSi(Cl)_c$$

dans laquelle $R^1$ représente un groupe comportant au moins une double ou triple liaison carbone-carbone polymérisable, lié par l'intermédiaire d'une liaison Si-C à un atome de silicium,
$R^2$ représente un groupe hydrocarboné, saturé ou aromatique, éventuellement substitué,
a vaut 1 ou 2,
b vaut 0 ou 1,
c vaut 2 ou 3,
(a + b + c) = 4,
éventuellement en combinaison avec

(i) au moins un chlorosilane de formule générale (2)

$$R^1{}_dR^2{}_eSi(Cl)_f$$

dans laquelle $R^1$ et $R^2$ ont la signification ci-dessus,
d = 0 ou 3,
e = 0, 1, 2 ou 3,
f = 1, 2 ou 3,
où (d + e + f) = 4 et pour d = 3 et e = 2 ou 3, les groupes $R^1$ et $R^2$ peuvent être identiques ou différents, et/ou
(ii) au moins un composé choisi parmi les tétrachlorures et tétrabromures de Ge, Si, Ti et Zr, et $AlCl_3$ et $AlBr_3$,

en présence d'un agent de condensation capable d'une réaction de condensation non hydrolytique avec les composés halogénés ci-dessus, ou
(a') la condensation d'au moins un alcoxysilane de formule générale (3)

$$R^1{}_aR^2{}_bSi(OR)_c$$

dans laquelle $R^1$, $R^2$, a, b et c ont la signification indiquée ci-dessus, R représente un groupe alkyle,
éventuellement en combinaison avec

(i') au moins un alcoxysilane de formule générale (4)

$$(4) \qquad R^1{}_dR^2{}_eSi(OR)_f$$

dans laquelle $R^1$, $R^2$, R, d, e et f ont la signification indiquée ci-dessus, et/ou
(ii') au moins un composé de formule générale (5)

$$(5) \qquad M(OR)_g$$

dans laquelle
R a la signification indiquée ci-dessus,
M représente un atome de Ge, Ti, Zr ou Al,
g vaut 3 lorsque M = Al, et g = 4 dans tous les autres cas, en présence d'un acide anhydre, et
(b) la polymérisation thermique et/ou photochimique du produit de condensation obtenu par l'étape (a) ou (a').

**3.** Procédé selon la revendication 2, **caractérisé par le fait que** l'agent de condensation dans la variante (a) est choisi parmi le t-butanol, l'alcool benzylique, le benzaldéhyde, le tétrabenzoxysilane, l'éther diisopropylique, l'éther diéthylique, l'éther dibenzylique et l'acide trifluoroacétique.

**4.** Procédé selon l'une quelconque des revendications 2 et 3, **caractérisé par le fait que** la fraction en silanes de formule générale (1) et/ou (3), rapportée à l'ensemble des composés condensables présents, est comprise entre 5 et 100 % en moles.

**5.** Procédé selon l'une quelconque des revendications 2 à 4, **caractérisé par le fait que** les groupes $R^1$ englobent des groupes de formule $H_2C=CR^3\text{-}CO\text{-}O\text{-}(CH_2)_n\text{-}CH_2\text{-}$ avec $R^3$ = H, $CH_3$, F ou Cl et n = 1 à 5 et/ou des groupes de formule $H_2C=CH\text{-}(CH_2)_m\text{-}$ avec m = 0 ou 1.

**6.** Procédé selon l'une quelconque des revendications 2 à 5, **caractérisé par le fait que** les groupes $R^2$ sont des groupes alkyle et/ou fluoroalkyle comportant au moins 3 atomes de fluor.

**7.** Procédé selon la revendication 6, **caractérisé par le fait que** les groupes alkyle sont des groupes méthyle et/ou éthyle.

**8.** Procédé selon l'une quelconque des revendications 2 à 7, **caractérisé par le fait que** a dans la formule générale (1) ou (3) vaut 1.

**9.** Procédé selon l'une quelconque des revendications 2 à 8, **caractérisé par le fait que** dans la formule générale (2) ou (4), d = 0, e = 0, 1 ou 2 et f = 2 ou 3.

**10.** Procédé selon l'une quelconque des revendications 1 à 9, **caractérisé par le fait que** la polymérisation de l'étape (2) ou (b) est une copolymérisation du polycondensat avec au moins un composé organique ne contenant aucun élément différent de C, H, D, O, N ou des atomes d'halogène, et contient une seule double ou triple liaison carbone-carbone polymérisable.

**11.** Procédé selon la revendication 10, **caractérisé par le fait que** le composé organique englobe un composé comportant au moins 3 atomes de fluor.

**12.** Procédé selon la revendication 11, **caractérisé par le fait que** le composé organique fluoré présente un groupe aliphatique comportant au moins 2 atomes de carbone ou un groupe aromatique comportant au moins 4 atomes de fluor.

**13.** Procédé selon l'une quelconque des revendications 11 et 12, **caractérisé par le fait que** le composé organique fluoré est choisi parmi les styrènes partiellement ou complètement fluorés, les esters partiellement ou complètement fluorés d'acides monocarboxylique ou polycarboxyliques insaturés, les composés allyle fluorés, et les composés vinyliques fluorés ou des mélanges de ces composés.

**14.** Procédé selon l'une quelconque des revendication 10 à 13, **caractérisé par le fait que** l'on utilise en plus du composé organique comportant une seule double ou triple liaison carbone-carbone polymérisable, ou à la place de celui-ci, un agent de réticulation éventuellement fluoré et/ou portant éventuellement des groupes silane possédant au moins deux liaisons polymérisables.

**15.** Procédé selon l'une quelconque des revendications 1 à 14, **caractérisé par le fait que** l'on utilise dans l'étape (2) ou (b) en plus un amorceur thermique et/ou un amorceur photochimique.

**16.** Procédé selon l'une quelconque des revendications 1 à 15, **caractérisé par le fait que** la polymérisation dans l'étape (2) ou (b) se fait par voie photochimique, suivie éventuellement d'un post-traitement thermique.

**17.** Procédé de fabrication de nanoparticules d'oxydes, pauvres en groupes hydroxyle, comprenant la réaction d'au moins un chlorure, bromure ou iodure de Ge, Sn, Si, Ti, Zr, Hf, Al, Zn, Nb ou Ca avec un agent de condensation capable d'une condensation non-hydrolytique de ces halogénures, dans un solvant inerte vis-à-vis des réactifs et des produits, puis éventuellement la réaction des nanoparticules ainsi formées avec un agent de modification de la surface capable de remplacer les résidus présents à la surface des nanoparticules par des résidus comportant des liaisons polymérisables et/ou des groupes alkyle.

**18.** Procédé selon la revendication 17, **caractérisé par le fait que** le composé à condenser est choisi parmi $SiCl_4$, $SiBr_4$ et $SiI_4$.

**19.** Procédé selon l'une quelconque des revendications 17 et 18, **caractérisé par le fait que** l'agent de condensation est choisi parmi le t-butanol, l'alcool benzylique, le benzaldéhyde, le tétrabenzoxysilane, l'éther diisopropylique, l'éther diéthylique, l'éther dibenzylique et l'acide trifluoroacétique.

**20.** Procédé selon l'une quelconque des revendication 17 à 19, **caractérisé par le fait que** le rapport molaire d'atomes d'halogène du composé à condenser à l'agent de condensation est compris entre 1:1 et 1:50.

**21.** Procédé selon l'une quelconque des revendications 17 à 20, **caractérisé par le fait que** le solvant englobe un hydrocarbure aliphatique halogéné.

**22.** Procédé selon l'une quelconque des revendications 17 à 21, **caractérisé par le fait que** le solvant englobe le chlorure de méthylène et/ou le chloroforme.

**23.** Procédé selon l'une quelconque des revendications 17 à 22, **caractérisé par le fait que** la condensation se déroule à une température assez élevée qui peut aller jusqu'au point d'ébullition de l'agent de condensation utilisé ou du solvant utilisé.

**24.** Procédé selon l'une quelconque des revendications 17 à 23, **caractérisé par le fait que** la condensation se fait en présence d'un catalyseur.

**25.** Procédé selon l'une quelconque des revendications 17 à 24, **caractérisé par le fait que** l'on élimine, après la condensation, les composants volatils du mélange réactionnel.

**26.** Procédé selon l'une quelconque des revendications 17 à 25, **caractérisé par le fait que** l'agent de modification de la surface, éventuellement utilisé, est au moins un chlorosilane de formule générale (1) ou (2) telle que définie dans l'une quelconque des revendications 2 et 5 à 9.

**27.** Nanoparticules d'oxydes pauvres en groupes hydroxyle que l'on peut obtenir selon l'une quelconque des revendications 17 à 26.

**28.** Procédé de fabrication de composites organo-minéraux fluorés, pauvres en groupes hydroxyle, comprenant la polymérisation thermique et/ou photochimique d'au moins un composé fluoré comportant au moins une double ou triple liaison carbone-carbone polymérisable en présence de nanoparticules d'oxydes selon la revendication 27.

**29.** Procédé selon la revendication 28, **caractérisé par le fait que** le composé fluoré est au moins un produit de condensation fluoré tel que défini dans l'une quelconque des revendications 2 à 9 et/ou au moins un composé organique fluoré polymérisable tel que défini dans l'une quelconque des revendications 11 à 14.

**30.** Composite organo-minéral pauvre en groupes hydroxyle que l'on peut obtenir selon un procédé défini selon l'une quelconque des revendications 1 à 16, 28 et 29.

**31.** Composite selon la revendication 30 sous forme de pièces moulées ou de couches.

**32.** Utilisation des composites selon l'une quelconque des revendications 30 et 31, pour la fabrication de pièces moulées, de couches, de monolithes, d'adhésifs et de masses d'étanchéité.

**33.** Produit de condensation fluoré que l'on peut obtenir selon le procédé défini dans l'une quelconque des revendications 1 et 2, étape (1) ou (a) et (a').